# EUROPEAN PATENT APPLICATION

(11) **EP 3 296 946 A1**
(43) Date of publication of application: **21.03.2018**
(21) Application number: 17191720.6
(22) Date of filing: 19.09.2017
(51) Int. Cl.: G06Q 40/06

(54) **IMPROVED DATA ACCESS IN A COMPUTER BASED VIRTUAL FUND MANAGEMENT SYSTEM**

(30) Priority: 19.09.2016 HK 16110971
(71) Applicant: Prive Services Limited, Hong Kong (HK)
(72) Inventor: SCHILLINGER, Julian Moritz, Hong Kong (HK)
(74) Representative: inCompass IP Europe Limited

(57) **Abstract**

The invention provides a computer based system and method for managing a financial assets fund on behalf of a plurality of investors using client devices. The system comprises a network based processor configured to receive input data from a plurality of client devices. It also received real time or near real time data defining current financial asset holdings in a portfolio of the financial assets fund. The processor is configured to adjust the balance of financial asset holdings in the portfolio in response to the received client device input data, and preferably to then send data to each client device to update each client's investor account with the fund to replicate in said client account the same adjusted asset holdings as held in said fund proportionally in accordance with each client's investment amount.

## Description

### Field of the Invention

The invention relates to a computer implemented system and method for managing one or more client portfolios for one or more client investors for acquiring financial assets in one or more virtual funds on behalf of said client investors in a manner which at least improves access to real time or near real time portfolio and valuation data.

### Background of the Invention

A mutual fund is a company which pools money from many client investors and invests the money in financial assets such as shares (stocks), bonds, short-term money market instruments, other securities or assets, etc. or any combination of these and other assets. The combined holdings of such financial assets owned by the mutual fund are known as its fund or investment portfolio. The fund portfolio is typically managed by a team of licensed or registered investment advisors who manage the purchase and sale of financial assets into and out of the fund portfolio usually according to a predetermined investment prospectus or strategy.

The mutual fund company issues mutual fund shares or units to its investors in proportion to their invested amounts. The mutual fund shares or units held by an investor therefore represent that investor's proportionate ownership of the fund's holdings and any income generated by said holdings, but the investor does not directly own the or any proportion of the actual financial assets comprising the fund portfolio. The actual assets are owned by the mutual fund company which transfers value back to each investor proportionally to their investment amounts by way of the mutual fund shares or units. Consequently, an investor purchases mutual fund shares or units directly from the fund company itself or through a broker. The price that an investor pays for a share or unit in the fund is the fund's 'per share net asset value' (NAV) plus any shareholder fees that the fund company or broker imposes at the time of purchase. The investor therefore has a one to one relationship with the mutual fund company, even if using a broker, where the investor holds shares or units in that fund.

Mutual fund shares or units are redeemable meaning that any investor can sell their shares or units back to the fund or a broker acting for the fund. An investor can therefore redeem their fund shares or units at the fund's current NAV less any fees and/or charges applied on redemption.

Whilst mutual funds provide many benefits to investors such as enabling them to invest in a diversified manner compared to, for example, an investor personally purchasing shares in one or more companies, there are a number of technical data access and processing problems which are inherent in the structure and operation of mutual funds. One such data access problem is that investors typically cannot ascertain the exact make-up of a fund's portfolio which may hinder their understanding of whether or not the fund is fulfilling its investment strategy. Nor can they directly influence which financial assets the fund buys or sells or the timing of such trades. A further data access issue is that, in contrast to an individual company's share price which can typically be accessed in real time or near real time with relative ease by accessing, for example, a financial website or a broker system website, an investor in a mutual fund purchases or redeems shares or units in the fund at the fund's NAV, but which the fund may not calculate for several hours or more after the investor has placed an order for purchase or redemption. In many jurisdictions, mutual funds are required to calculate their NAV only once a day after the market has closed. This relatively loose requirement is a practical reflection of the complexity of retrieving and processing the data necessary to calculate a fund's NAV. Any requirement to calculate the NAV on a tighter timescale may diminish the mutual fund's computer based management system's ability to operate efficiently in effecting orders to purchase and/or sell financial assets and to reconcile such trades to meet the strategy requirements of the fund. In any event, a newly calculated NAV for a mutual fund is typically not available second to second, minute to minute or even hour to hour in contrast to share price value data which is available almost instantaneously. The lack of access to real time or near real NAV data for mutual funds creates uncertainty for investors particularly when there is turbulence in the financial markets. It also reduces the investment efficiency of the fund itself, because of the uncertainty created by the NAV, which may be many hours out of date.

There is a need therefore for a system and method for centrally managing client portfolios for a plurality of investors for acquiring financial assets on behalf of said investors in one or more virtual funds which mimics the operation to some degree of a mutual fund, but which overcomes or mitigates one or more of: the aforementioned data access and processing problems; the risks and costs of trading for the fund and, by consequence, its investors; and the inability of investors to influence the fund's asset purchases/sales and the timing of such asset purchases/sales.

### Objects of the Invention

An object of the present invention is to provide an improved client portfolio management system and method.

Another object of the present invention is to mitigate or obviate to some degree one or more problems associated with known mutual fund management systems and methods, or at least to provide a useful alternative.

The above objects are met by the combination of features of the main claims; the subclaims disclose further advantageous embodiments of the invention.

One skilled in the art will derive from the following description other objects of the invention. Therefore, the foregoing statements of object are not exhaustive and serve merely to illustrate some of the many objects of the present invention.

### Summary of the Invention

In a first main aspect, the invention provides a computer based system and method for managing a plurality of financial assets on behalf of a plurality of investors using client devices. The system comprises a processor configured to receive input data from a plurality of client devices. The client devices may comprise desktop computers, laptops, tablet computers, smart phone or any other suitable client device providing access to a graphical user interface by which a client may manage their financial investments. The system of the invention provides a suitable graphical user interface to any suitably enabled electronic processing device to enable said client device to interact with the system of the invention over a communications network. The system of the invention is a computer based system which preferably communicates through a computer network such as the internet to provide easy and reliable access to the graphical user interface for client devices.

The system processor may be a server based processor which is configured to also receive real time or near real time, i.e. close to real time, data defining current financial asset holdings in respective portfolios of the plurality of the financial assets virtual funds managed by the computer based system. The processor is preferably configured to receive real time or near real time market data defining current values for each of the financial asset holdings in the plurality of virtual fund portfolios and other financial assets in the market. As such, the processor may be configured to process said received client input data, said data defining current financial asset holdings in the plurality of virtual fund portfolios, and said market data to generate data defining: (i) sell orders for assets to be sold and the value expected when such orders are executed based on the received market data; and (ii) purchase orders for assets to be purchased and the expected cost based on the received market data.

The processor may be configured to submit said sell orders to a computer based broker system or the like for execution and thereafter to receive data from the broker system on value realized for executed sell orders. The processor may also be configured to receive at this time new real time or near real time market data and, in response, to generate data defining a difference between the value expected from the execution of sell orders and the value actually realized. The generation of value difference data may involve foreign exchange rate data. This may involve foreign exchange spot orders where one currency is exchanged for another currency. Currency exchanges such as this are normally required where securities are sold/purchased in different currencies. The processor may be configured to use the value difference data and the new market data to adjust the pre-calculated purchase orders and thereafter to submit the adjusted purchase orders to the broker system for execution. In response, the processor may be configured to receive data defining newly purchased assets from the broker and to determine from said received data which parts of the newly purchased assets belong to which of the plurality of the virtual fund portfolios. The system may operate an 'overall' portfolio which sums the contents of the plurality of virtual fund portfolios. The organization of assets into one or more portfolios by the system is a management issue - what is important is that the system tracks which assets belong to which investors via which ones of the plurality of virtual funds.

The processor is preferably configured to allocate said parts of the newly purchased assets to the respective virtual fund portfolios and to combine said parts of the newly purchased assets with data defining assets remaining in said virtual fund portfolios to update the portfolio holdings.

The processor may be configured to generate data for each client device to update each client's investor account to replicate in said client account the same updated asset holdings as held in said plurality of virtual fund portfolios proportionally in accordance with each client's investment amounts to the respective virtual funds. As such, the financial assets are held in the plurality of virtual fund portfolios and managed by the funds' investment managers, but the actual assets are directly owned by the investors in proportion to their invested amounts and held in their respective client portfolios. This creates a direct ownership by the client investors of the financial assets held in their respective client portfolios, but where the financial assets are centrally managed as a plurality of virtual funds. One technical benefit is that the valuation at any moment in time of an investor's holding (the client's portfolio) in one or more of the plurality of virtual funds is directly linked to the market values of the assets owned by said investor and furthermore the investor is able to access real time or near real time value data through any of a number of market data sources including the system of the invention to obtain valuations of said assets. Thus, in contrast to a mutual fund where values are tied to an infrequently calculated NAV, the arrangement of the invention provides a virtual fund based investment vehicle, but with direct ownership by investors of the virtual funds' underlying assets and access to real time or near real time valuation data.

A further technical benefit is that investors can also access real time or near real time data displaying the asset holdings of the virtual funds again in contrast to a mutual fund.

A yet further technical benefit is that the fund investment managers can much more easily and with less computational complexity determine the overall valuations of the virtual funds' holdings again based on real time data.

The system enables the virtual funds to be centrally managed in a computationally efficient manner compared to alternative fund management systems.

In another aspect of the invention, there is provided a computer based system and method for managing a virtual financial assets fund on behalf of a plurality of investors using client devices, said system comprising a processor configured to receive input data from a plurality of client devices, receive real time or near real time data defining current financial asset holdings in a portfolio of the virtual financial assets fund, adjust the balance of financial asset holdings in the portfolio in response to the received client device input data, and preferably send data to each client device to update each client's investor account (client portfolio) with the virtual fund to replicate in said client account the same adjusted asset holdings as held in said virtual fund proportionally in accordance with each client's investment amount.

The summary of the invention does not necessarily disclose all the features essential for defining the invention; the invention may reside in a sub-combination of the disclosed features.

### Brief Description of the Drawings

The foregoing and further features of the present invention will be apparent from the following description of preferred embodiments which are provided by way of example only in connection with the accompanying figures, of which:
Figure 1 is a schematic diagram showing a prior art mutual fund system;
Figure 2 is a schematic diagram showing a virtual fund (vFund) system according to a first embodiment of the invention; and
Figure 3 is a schematic diagram showing a virtual fund (vFund) system according to a second embodiment of the invention.

### Description of Preferred Embodiments

The following description is of preferred embodiments by way of example only and without limitation to the combination of features necessary for carrying the invention into effect.

Reference in this specification to "one embodiment" or "an embodiment" means that a particular feature, structure, or characteristic described in connection with the embodiment is included in at least one embodiment of the invention. The appearances of the phrase "in one embodiment" in various places in the specification are not necessarily all referring to the same embodiment, nor are separate or alternative embodiments mutually exclusive of other embodiments. Moreover, various features are described which may be exhibited by some embodiments and not by others. Similarly, various requirements are described which may be requirements for some embodiments but not other embodiments.

It should be understood that the elements shown in the figure, may be implemented in various forms of hardware, software or combinations thereof. Preferably, these elements are implemented in a combination of hardware and software on one or more appropriately programmed general-purpose devices, which may include a processor, memory and input/output interfaces.

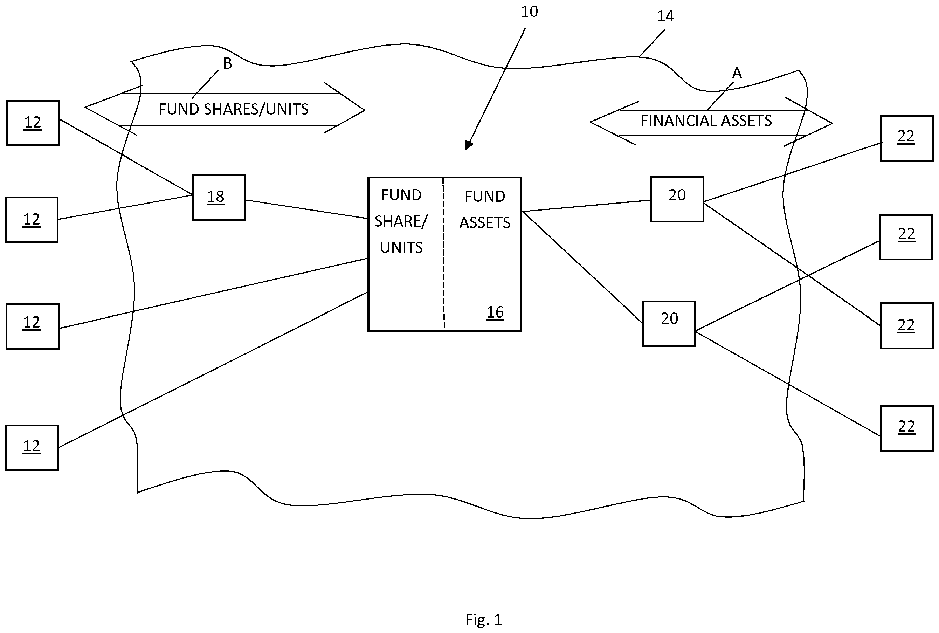

Referring to Figure 1, shown is a schematic diagram of a prior art mutual fund system 10 comprising a plurality of client devices 12 connected by a communications network such as the internet 14 to a mutual fund server system 16. The client devices 12 may be directly connected to the server system 16 or may connect through an intermediary system 18 such as a financial advisor system or broker system. The mutual fund server system 16 is itself connected to one or more dealer or broker systems 20 through which the mutual fund purchases and sell financial assets (arrow A) from and to financial institutions 22. The financial assets held by the mutual fund are owned by the fund which in turn issues mutual fund shares to units (arrow B) to its investors in proportion to their invested amounts.

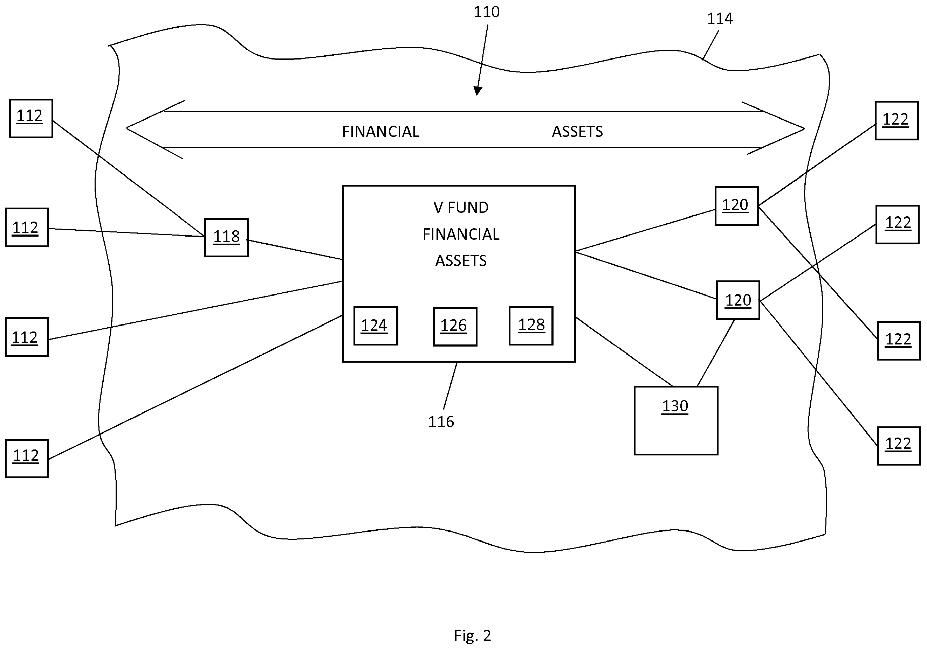

Referring to Figure 2, shown is a schematic diagram of a first embodiment of a virtual fund system 100 according to the invention. By virtual fund is meant that the fund operates in a manner which mimics that of a mutual fund in pooling investors' money to trade financial assets in pursuit of an investment strategy, but without the asset ownership constraints of a mutual fund. The virtual fund system 100 or 'vFund' system 100 as hereinafter referred to comprises a plurality of client devices 112 connected by a communications network such as the internet 114 to the vFund server system 116. The client devices 112 may be directly connected to the server system 116 or may connect through an intermediary system 118 such as a financial advisor system or broker system. It will be understood that a client device 112 is not limited to a device operated by an individual investor, but may be representative of an institutional investor, an advisor investor or any other third party wishing to invest in the vFund 101.

The vFund server system 116 is itself connected to one or more dealer or broker systems 120 through which the vFund 101 purchases and sell financial assets from and to financial institutions 122 or the like. The financial assets managed by the vFund 101 are owned by the investors in proportion to their invested amounts. The vFund server system 116 comprises a processor 124, at least one memory 126 storing machine readable instructions which, when implemented by the processor 124, configures the processor 124 to implement the methods of the invention as herein described and to generate a graphical user interface accessible to the client devices 112. The vFund server system 116 also includes a system database 128 for storing client account data, fund asset data, transaction data and all other data necessary for functioning of the vFund server system 116. The system database 128 may be embodied in the server 116 or comprise a separate device connected to the server 116 via a communications network such as the internet 114. In addition, the system of Figure 2 may include one or more market information databases 130 for providing real time or near real time asset valuation data to the vFund server system 116 and the advisor and broker systems 118, 120. In some embodiments, the broker systems 120 provide the real time or near real time asset valuation data.

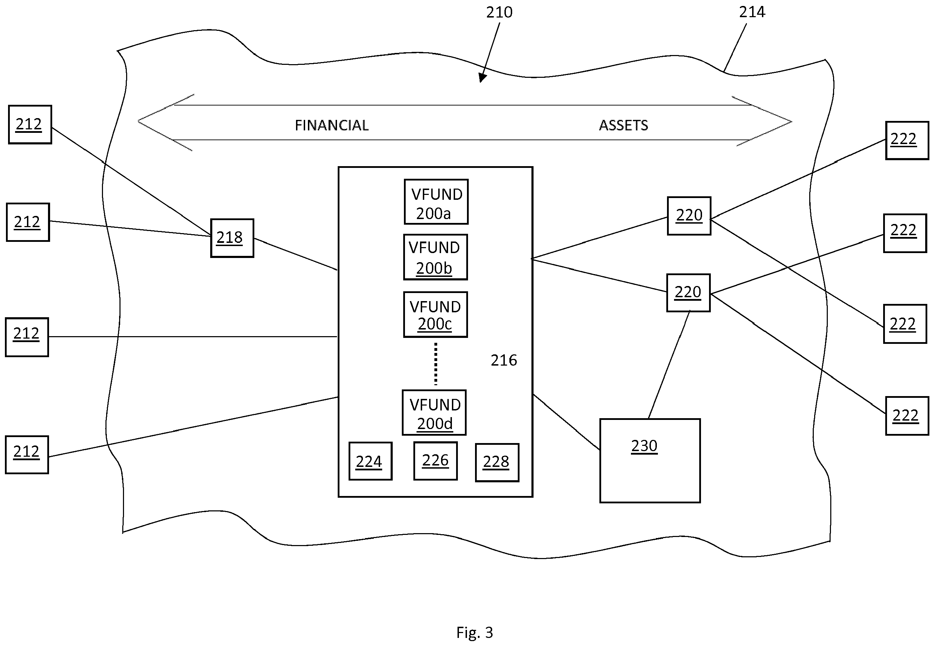

In the embodiment of Figure 2, the vFund server system 116 manages a single virtual financial assets fund (vFund) 101 on behalf of a plurality of investors using client devices 112 whereas in the embodiment of Figure 3, as hereinafter described, the server system manages a plurality of vFunds. The processor 124 of the system is configured to receive input data from the plurality of client devices 112 and to receive real time or near real time data defining current financial asset holdings in a portfolio of the vFund 101 from the system database 128. In response, the processor 124 adjusts the balance of financial asset holdings in the vFund portfolio in response to the received client device input data. It then generates for each client device 122 data updating each client's investor account with the fund to replicate in said client account the same adjusted asset holdings as now held in said fund proportionally in accordance with each client's investment amount. The generated data for an investor may immediately be sent to said investor's client device 112 or sent when the inventor next signs into the system 116. In any event, the data defines which assets managed by the fund 101 are owned by that investor with the technical benefits as hereinbefore and hereinafter described.

The client devices 112 may comprise desktop computers, laptops, tablet computers, smart phones or any other suitable client devices 112 providing access to the vFund system's graphical user interface by which a client (investor) may manage their financial investments. The system 116 can provide a suitable graphical interface to any suitably enabled electronic processing device to enable said client device 112 to interact with the system 116 over a suitable communications network 114. The system 116 preferably communicates through a computer network such as the internet 114, but in some embodiments private communications networks are utilised.

More specifically, the processor 124 is preferably configured to receive real time or near real time market data defining current values for each of the financial asset holdings in the vFund portfolio and other financial assets in the market. As such, the processor 124 may be configured to process said received client input data, said data defining current financial asset holdings in the vFund portfolio, and said market data to generate data defining: (i) sell orders for assets to be sold and the value expected when such orders are executed based on the received market data; and (ii) purchase orders for assets to be purchased and the expected cost based on the received market data. The processor 124 may be configured to submit said sell orders to a broker system 120 or the like for execution and thereafter to receive data from the broker system 120 on value realized for executed sell orders. The processor 124 may also be configured to receive new real time or near real time market data from the broker system 120 or a market information database 130 and, in response, to generate data defining a difference between the value expected from the execution of sell orders and the value actually realized. The generation of value difference data may involve foreign exchange rate data.

The processor 124 may be configured to use the value difference data and the new market data to adjust the pre-calculated purchase orders and thereafter to submit the adjusted purchase orders to the broker system 120 for execution. In response, the processor 124 may be configured to receive data defining newly purchased assets from the broker system 120. The processor 124 is configured to combine data defining said newly purchased assets with data defining assets remaining in said fund portfolio to update the portfolio holdings.

The processor 124 is configured to then generate data for each client device to update each client's investor account to replicate in said client account the same updated asset holdings as held in said updated fund portfolio proportionally in accordance with each client's investment amount. As such, the financial assets are managed by the fund's investment managers, but the actual assets are directly owned by the investors in proportion to their invested amounts. This creates a direct ownership link between the client investors and the financial assets allotted to their respective client portfolios. The technical benefit is that the valuation at any moment in time of an investor's client portfolio is directly linked to the market values of the assets owned by said investor and furthermore the investor is able to access real time or near real time valuation data through any of a number of market data sources to obtain valuations of said assets. Thus, in contrast to a mutual fund where values are tied to an infrequently calculated NAV, the arrangement of the invention provides a virtual fund based investment vehicle, but with direct ownership by investors of the fund's managed assets and access to real time or near real tine valuation data.

A further technical benefit is that investors can also access real time or near real time data displaying the composition of the assets managed by the virtual fund.

A yet further technical benefit is that the virtual fund investment managers can much more easily and with less computational complexity centrally determine the overall valuations of the fund's managed holdings again based on real time data

Referring to Figure 3, shown is a schematic diagram of a second embodiment of a virtual fund system 200 according to the invention. The 'vFund' system 200 of this embodiment is generally the same as that of Figure 2 save for the aspect that the 'vFund' system 200 comprises a plurality of vFunds 200a to 200n. As before, a plurality of client devices 212 is connected by a communications network such as the internet 214 to the vFund server system 216. The client devices 212 may be directly connected to the server system 216 or may connect through an intermediary system 218 such as a financial advisor system or broker system. The vFund server system 216 is itself again connected to one or more dealer or broker systems 220 through which the vFund managers purchase and sell financial assets from and to financial institutions 222 or the like for the plurality of vFunds. The vFund server system 216 comprises a processor 224, at least one memory 226 storing machine readable instructions which, when implemented by the processor 224, configures the processor 224 to implement the methods of the invention as herein described and to generate a graphical user interface accessible to the client devices 212. The vFund server system 216 also includes a system database 228 for storing client account data, fund asset data, transaction data and all other data necessary for functioning of the vFund server system 216. In addition, the system of Figure 3 may include one or more market information databases 230 for providing real time or near real time asset valuation data to the vFund server system 216 and the advisor and broker systems 218, 220.

In the embodiment of Figure 3, the vFund server system 216 manages a plurality of vFunds 200a to 200n on behalf of a plurality of investors using client devices 212. The processor 224 of the system is configured to receive input data from the plurality of client devices 212 and to receive real time or near real time data defining current financial asset holdings in the plurality of portfolios of the vFund 200a to 200n from the system database 228. In response, the processor 224 adjusts the balance of financial asset holdings in the plurality of portfolios in response to the received client device input data. It then generates for each client device 212 data updating each client's investor account with the fund to replicate in said client account the same adjusted asset holdings as now managed by said plurality of vFund portfolios proportionally in accordance with each client's investment amount(s).

More specifically, the processor 224 is preferably configured to receive real time or near real time market data defining current values for each of the financial asset holdings in the plurality of fund portfolios and preferably other financial assets in the market. The processor 224 is configured to process said received client input data, said data defining current financial asset holdings managed by the plurality of vFund portfolios, and said market data to generate data defining: (i) sell orders for assets to be sold and the value expected when such orders are executed based on the received market data; and (ii) purchase orders for assets to be purchased and the expected cost based on the received market data. The processor 224 is configured to submit said sell orders to a broker system 220 for execution and thereafter to receive data from the broker system 220 on value realized for executed sell orders. The processor 224 may also be configured to receive new real time or near real time market data from the broker system 220 or a market information database 230. The processor 224 defines a difference between the value expected from the execution of sell orders and the value actually realized. The processor 224 is configured to use the value difference data and any new market data to adjust the pre-calculated purchase orders and thereafter to submit the adjusted purchase orders to the broker system for execution. In response, the processor 224 receives data defining newly purchased assets from the broker system 220 and determines from said received data which parts of the newly purchased assets are to be assigned to which of the plurality of the vFund portfolios.

The processor 224 is configured to then allocate said parts of the newly purchased assets to the respective vFund portfolios and to combine data defining said parts of the newly purchased assets with data defining assets remaining in said vFund portfolios to update the portfolio holdings. The processor 224 is configured to then generate data for each client device to update each client's investor account to replicate in said client account the same updated asset holdings as managed by said plurality of vFund portfolios proportionally in accordance with each client's investment amounts in said vFunds.

One technical problem addressed by the embodiments of the invention is how to give client investors in a fund type investment vehicle real time access to valuation data of their invested amounts. The technical solution is to generate data for each client investor to update each client's investor account to replicate in said client account the same updated asset holdings as managed by said plurality of vFund portfolios proportionally in accordance with each client's investment amounts. This creates a direct ownership link by the client investors of the financial assets managed by the vFunds with the ability to thereby provide access to real time or near real time valuation data.

In support of the foregoing described embodiments of the invention, a number of software based sub-routines may be implemented by the processor 124, 224 as appropriate for implementing the foregoing and other methods of the invention to achieve the technical benefits as described. One sub-routine comprises a 'rebalancing process; which, in general, establishes a desired allocation for the whole or a part of the vFund portfolio. In case of a whole rebalancing, a sub-routine 'PortfolioAllocation' is implemented, but, in case of a partial rebalancing, one of either a 'PortfolioAllocationStrategyRebalancing' sub-routine or a 'PortfolioAllocationSwitch' sub-routine is implemented as described below.

### 'PortfolioAllocation'

This sub-routine changes the overall assets allocation of a vFund portfolio to a desired assets allocation. It comprises the steps or phases of:
1. Cancel all outstanding orders for the account/portfolio.
2. Get 'InvestorAccountInformation' from the database 128, 228 and/or from the broker system 120, 220, which states the current holdings of the portfolio in question.
3. Get market data from the market information database 130, 230 and/or the broker system 120,220. Preferably, this includes the live, i.e. real time or near real time, prices for each of the current holdings, for any target holdings and for any foreign exchange 'FX' rates required to convert from one price to another.
4. Ramp Down process: This calculates all orders and market data refresh requests for the positions which need to be sold and starts submitting sell orders. It also pre-calculates the positions which need to be bought for the next phase or stage. This step also saves the pre-rebalance positions of the portfolio and the target/ideal positions to be held after rebalancing to a 'Portfolio Allocation' object for future use.
5. Ramp Up process: This calculates how much cash or value was expected based on the expected execution prices from phase (4) and how much cash was used up/released based on the execution prices transacted in the market. It then adjusts the quantities for the ramp-up orders pre-calculated in phase (4) by this 'cash factor'. It then starts the actual purchase of assets.

Each 'PortfolioAllocation' object owns a list of 'PortfolioAllocationStrategyRebalancing' and PortfolioAllocationSwitch objects.

### 'PortfolioAllocationStrategyRebalancing'

This sub-routine changes the asset allocation within a single investment strategy, i.e. vFund, without affecting the other strategies (vFunds) in the overall portfolio. It follows the phases set out below:

### 'PortfolioAllocationSwitch'

This sub-routine increases or decreases the exposure to a single strategy (vFund) by scaling the positions currently held in the vFund up and down. It follows the phases set out below:
1. Get market data from the marker information database 120, 230 and/or the broker system 120, 220.
2. Calculate the effective positions held in the vFund to be 'scaled'.
3. Ramp Down process: Scale the effective positions up or down (depending on whether assets are to be bought or sold). Then calculate the orders required to get to the scaled positions (unless the position was short/negative in which case it will not be scaled). This also pre-calculates any buy orders where applicable.
4. Ramp Up process: Activate the buy orders, if any. This will also be used to buy or sell a specified quantity of a direct-link strategy (like a market order).

### 'Order Adjustment process'

Some of the orders mentioned above need to be re-adjusted within the execution of a phase based on (a) execution price of a previous order, e.g. where say a FX rate was less at time of execution that expected so less of the asset can be purchased, (b) market price update (in the ramp-up process the processor is preferably configured to always request a market price refresh before executing to recalculate the desired quantity of an order).

The above sub-routines define a complex workflow system. Every request is wrapped as a 'BrokerRequest' sub-class instruction, e.g. a 'BrokerRequestExecuteOrder', a 'BrokerRequestTickerLivePrice', a 'BrokerRequestAccountInformation'. In turn all broker requests of a particular phase are put together in a 'BrokerRequestCollection' message construct which is transmitted as a single message to a receiving system such as the broker system market data provider 120. 220. The receiving system such as the broker system 120, 220 is configured to know in which order to execute the phases defined by the 'BrokerRequestCollection' message construct. The receiving system is also configured to know which requests within a message construct collection depend on which preceding request (these being the ones requiring adjustment), and submits them only to the receiving system/broker system 120, 220 if the preceding request has been completed.

### 'Effective Portfolio Allocation Calculation'

The calculation provided by this sub-routine establishes which holdings each vFund in an overall portfolio (i.e. a portfolio 'containing' or summing all assets in the plurality of vFund portfolios) should own. In other words this is the sub-routine which determines which positions belong to which vFund (strategy).

There are some challenges in doing this. The target positions expected for a strategy (vFund) with a portfolio may deviate from the expected ones for the following reasons:
1. They were adjusted, because they were traded in even lots (i.e. orders had to be rounded down).
2. The realized execution price differed from the expected execution price.
3. Split events occurred and hence affected (a) the holdings in the portfolio prior to the rebalancing, or (b) the quantities transacted since the execution time.
4. The 'PortfolioAllocationStrategyRebalancing' or 'PortfolioAllocationSwitch' sub-routines may have superseded the initial expected quantities for a strategy.
5. Dividends have been paid and hence increased the cash portion allocated to the strategy (vFund).

To account for this, the processor 124, 224 is configured to first calculate the total quantity for each ticker to expect at the current time, to then allocate this quantity back to the vFunds in the portfolio.

More generally, the invention allows, using the embodiments of the vFund systems as described, to create financial products almost instantaneously, e.g. in minutes, at minimal cost. This allows advisors to (a) package existing investment products (such as stocks, bonds, etc.) based on themes, internal/external research, rule-based investment strategies, life goals and other users' inputs and to (b) make them executable. The system of the invention replicates all positions underlying vFunds into subscribing (investor) client accounts (via electronic order execution), while maintaining the look & feel of a fund investment.

vFunds as described herein (a) increase trading volume and reach new client segments by making ideas and trading strategies executable, (b) allow monetization of in-house intelligence by packaging research as vFunds, (c) make it easy to bring in external providers of research and ideas, and (d) allow execution and tracking of multiple life goals in a single account in a wealth planning context.

A vFund is a collection of securities that can be bought or sold as a group. Using vFunds as described herein allows advisors or individuals to easily convert research and product ideas to executable products. vFunds allow the intermediary to provide an up-to-date product range and to respond to a changing market environment and trends at minimum cost.

### vFunds allow:

- faster time-to-market
- more timely product set
- monetization of research
- additional fee revenues
- no counterparty risk
- Lower execution cost due to the lower number of orders. As many clients' portfolios follow the same vFund, changes in a vFunds allocation can lead to the same orders for many clients. The system allows grouping of these orders to block orders, so that the execution fee only applies once for many clients, and the shares are allocated proportionally across client accounts.
- The system's rebalancing process adjusts the order quantities along the rebalancing process to react to changes in the market environment to achieve an effective allocation as close as possible to the target allocation.

A vFund is a basket of securities (static or dynamic) which clients can invest in. Investors who subscribe to vFunds automatically replicate the same holdings in their own securities account. The system generates and tracks the orders required to replicate the vFund's holdings in the investor's account. As investors can mix and match different vFunds as well as traditional securities in a single account, the system keeps track of which units in the investor's account belong to which vFund. The system then aggregates these positions to a single line item, so that from an investor's perspective the vFund looks and feels like a fund.

Once connected to the system, all the participants benefit from the enhanced connectivity provided thereby. A client can get up to date information about all the investments in any account and can have access to high quality managers to whom they normally would not have access. An advisor can monetize accounts through portfolio customization and the vFund system, thus charging an asset under management 'AUM' based fee. A financial intermediary can monetize its in-house research and streamline product distribution based on centralized risk models. Other financial institutions such as banks can sell additional financial related products to all linked to the system (e.g. credit cards, mortgages, insurance). An investment manager in a remote part of the world can develop a new client base in regions previously not possible due to physical constraints and/or regulatory hurdles.

The present description illustrates the principles of the present invention. It will thus be appreciated that those skilled in the art will be able to devise various arrangements that, although not explicitly described or shown herein, embody the principles of the invention and are included within its spirit and scope.

Moreover, all statements herein reciting principles, aspects, and embodiments of the invention, as well as specific examples thereof, are intended to encompass both structural and functional equivalents thereof. Additionally, it is intended that such equivalents include both currently known equivalents as well as equivalents developed in the future, i.e., any elements developed that perform the same function, regardless of structure.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

It is to be understood that, if any prior art publication is referred to herein, such reference does not constitute an admission that the publication forms a part of the common general knowledge in the art.

## Claims

1. A computer based system for managing a plurality of financial assets funds on behalf of a plurality of investors using client devices, said system comprising:
a processor configured to:
receive input data from a plurality of client devices;
receive real time or near real time data defining current financial asset holdings in respective portfolios of plurality of the financial assets funds;
receive real time or near real time market data defining current values for each of the financial asset holdings in the plurality of fund portfolios and other financial assets in the market;
process said received client input data, said data defining current financial asset holdings in the plurality of fund portfolios, and said market data to generate data defining: (i) sell orders for assets to be sold and the value expected when such orders are executed based on the received market data; and (ii) purchase orders for assets to be purchased and the expected cost based on the received market data;
submit said sell orders to a computer based broker system for execution;
receive data from the broker system on value realized for executed sell orders;
receive new real time or near real time market data;
generate data defining a difference between the value expected from the execution of sell orders and the value realized;
use the value difference data and the new market data to adjust the pre-calculated purchase orders;
submit the adjusted purchase orders to the broker system for execution;
receive data defining newly purchased assets from the broker;
determine from said received data defining newly purchased assets which parts of the newly purchased assets belong to which of the plurality of the fund portfolios;
allocate said parts of the newly purchased assets to the respective fund portfolios;
for each fund portfolio, combine said parts of the newly purchased assets with data defining assets remaining in said fund portfolios to update the portfolio holdings;
generate data for each client device to update each client's investor account to replicate in said client account the same updated asset holdings as held in said plurality of fund portfolios proportionally in accordance with each client's investment amount; and
in response to a client request, provide access to a real time or near real time valuation of said client's holdings in the plurality of fund portfolios based on said real time or near real time market data.

2. The computer based system of claim 1, wherein the client directly owns the updated asset holdings as proportionally replicated in their client account.

3. A computer based system for managing a plurality of financial assets funds on behalf of a plurality of investors using client devices, said system comprising:
a processor configured to:
receive input data from a plurality of client devices;
receive real time or near real time data defining current financial asset holdings in respective portfolios of the plurality of financial assets funds;
adjust the balance of financial asset holdings in one or more of the portfolios in response to the received client device input data; and
generate data for each client device to update each client's investor account to replicate in said client account the same adjusted asset holdings as held in said plurality of fund portfolios proportionally in accordance with each client's investment amount.

4. The computer based system of claim 3, wherein, in response to a client request, the processor is configured to provide access to a real time or near real time valuation of said client's holdings in the plurality of fund portfolios based on said real time or near real time market data.

5. The computer based system of claim 3, wherein the client directly owns the updated asset holdings as proportionally replicated in their client account.

6. The computer based system of claim 3, wherein the processor is configured to adjust the balance of financial asset holdings in one or more of the portfolios by:
receiving real time or near real time market data defining current values for each of the financial asset holdings in the plurality of fund portfolios and other financial assets in the market;
processing said received client input data, said data defining current financial asset holdings in the plurality of fund portfolios, and said market data to generate data defining: (i) sell orders for assets to be sold and the value expected when such orders are executed based on the received market data; and (ii) purchase orders for assets to be purchased and the expected cost based on the received market data;
submitting said sell orders to a computer based broker system for execution;
receiving data from the broker system on value realized for executed sell orders;
receiving new real time or near real time market data;
generating data defining a difference between the value expected from the execution of sell orders and the value realized;
using the value difference data and the new market data to adjust the pre-calculated purchase orders;
submitting the adjusted purchase orders to the broker system for execution;
receiving data defining newly purchased assets from the broker;
determining from said received data defining newly purchased assets which parts of the newly purchased assets belong to which of the plurality of the fund portfolios;
allocating said parts of the newly purchased assets to the respective fund portfolios; and
for each fund portfolio, combining said parts of the newly purchased assets with data defining assets remaining in said fund portfolios to update the portfolio holdings.

7. A computer based system for managing a financial assets fund on behalf of a plurality of investors using client devices, said system comprising:
a processor configured to:
receive input data from a plurality of client devices;
receive real time or near real time data defining current financial asset holdings in a portfolio of the financial assets fund;
receive real time or near real time market data defining current values for each of the financial asset holdings in the fund portfolio and other financial assets in the market;
process said received client data, said data defining current financial asset holdings in the fund portfolio, and said market data to generate data defining: (i) sell orders for assets to be sold and the value expected when such orders are executed based on the received market data; and (ii) purchase orders for assets to be purchased and the expected cost based on the received market data;
submit said sell orders to a computer based broker system for execution;
receive data from the broker system on value realized for executed sell orders;
receive new real time or near real time market data;
generate data defining a difference between the value expected from the execution of sell orders and the value realized;
use the value difference data and the new market data to adjust the pre-calculated purchase orders;
submit the adjusted purchase orders to the broker system for execution;
receive data defining newly purchased assets from the broker;
combine said received data defining newly purchased assets with data defining assets remaining in the fund portfolio to update the portfolio holdings; and
send data to each client device to update each client's investor account with the fund to replicate in said client account the same updated asset holdings as held in said fund proportionally in accordance with each client's investment amount.

8. The computer based system of claim 7, wherein the processor is configured to, in response to a client request, provide access to a real time or near real time valuation of said client's holding in the fund based on real time or near real time market data.

9. The computer based system of claim 7, wherein the client directly owns the updated asset holdings as proportionally replicated in their client account.

10. A computer based system for managing a financial assets fund on behalf of a plurality of investors using client devices, said system comprising:
a processor configured to:
receive input data from a plurality of client devices;
receive real time or near real time data defining current financial asset holdings in a portfolio of the financial assets fund;
adjust the balance of financial asset holdings in the portfolio in response to the received client device input data;
send data to each client device to update each client's investor account with the fund to replicate in said client account the same adjusted asset holdings as held in said fund proportionally in accordance with each client's investment amount.

11. The computer based system of claim 10, wherein, in response to a client request, the processor is configured to provide access to a real time or near real time valuation of said client's holdings in the fund portfolio based on said real time or near real time market data.

12. The computer based system of claim 10, wherein the client directly owns the updated asset holdings as proportionally replicated in their client account.

13. The computer based system of claim 10, wherein the processor is configured to adjust the balance of financial asset holdings in one or more of the portfolios by:
receive real time or near real time market data defining current values for each of the financial asset holdings in the fund portfolio and other financial assets in the market;
process said received client data, said data defining current financial asset holdings in the fund portfolio, and said market data to generate data defining: (i) sell orders for assets to be sold and the value expected when such orders are executed based on the received market data; and (ii) purchase orders for assets to be purchased and the expected cost based on the received market data;
submit said sell orders to a computer based broker system for execution; receive data from the broker system on value realized for executed sell orders; receive new real time or near real time market data;
generate data defining a difference between the value expected from the execution of sell orders and the value realized;
use the value difference data and the new market data to adjust the pre-calculated purchase orders;
submit the adjusted purchase orders to the broker system for execution; receive data defining newly purchased assets from the broker; and
combine said received data defining newly purchased assets with data defining assets remaining in the fund portfolio to update the portfolio holdings.

14. A computer implemented method of managing a plurality of financial assets funds on behalf of a plurality of investors using client devices, said method comprising:
receiving input data from a plurality of client devices;
receiving real time or near real time data defining current financial asset holdings in respective portfolios of the plurality of financial assets funds;
adjusting the balance of financial asset holdings in one or more of the portfolios in response to the received client device input data; and
generating data for each client device to update each client's investor account to replicate in said client account the same adjusted asset holdings as held in said plurality of fund portfolios proportionally in accordance with each client's investment amount.

15. A computer implemented method of managing a financial assets fund on behalf of a plurality of investors using client devices, said method comprising:
receiving input data from a plurality of client devices;
receiving real time or near real time data defining current financial asset holdings in a portfolio of the financial assets fund;
adjusting the balance of financial asset holdings in the portfolio in response to the received client device input data;
sending data to each client device to update each client's investor account with the fund to replicate in said client account the same adjusted asset holdings as held in said fund proportionally in accordance with each client's investment amount.
